# Europäisches Patentamt
# European Patent Office
# Office européen des brevets

(19)

(11) Veröffentlichungsnummer: **0 006 194**
**B1**

(12)

# EUROPÄISCHE PATENTSCHRIFT

(21) Anmeldenummer: **79101813.8**

(22) Anmeldetag: **07.06.79**

(51) Int. Cl.³: **H 04 L 25/28, H 03 F 3/38**

---

(54) Schaltungsanordnung zur erdfreien Übertragung von Signalen über Trennstellen in Fernmeldeanlagen

---

(30) Priorität: **19.06.78 DE 2826897**

(43) Veröffentlichungstag der Anmeldung:
**09.01.80 Patentblatt 80/01**

(45) Bekanntmachung des Hinweises auf die Patenterteilung:
**07.01.81 Patentblatt 81/01**

(84) Benannte Vertragsstaaten:
**AT CH DE FR NL SE**

(56) Entgegenhaltungen:
**DE - A - 2 116 528**
**DE - A - 2 440 341**
**DE - A - 2 504 785**
**DE - B - 2 050 994**
**DE - B - 2 130 916**
**DE - B - 2 329 823**
**DE - B - 2 411 871**
**US - A - 3 946 324**

(73) Patentinhaber: **Nixdorf Computer Aktiengesellschaft**
**Fürstenallee 7**
**D - 4790 Paderborn (DE)**

(72) Erfinder: **Hüllwegen, Josef**
**Hüttenstrasse 61**
**D - 4791 Altenbeken (DE)**

(74) Vertreter: **Schaumburg, Karl-Heinz, et al**
**Patentanwälte Schaumburg, Schulz-Dörlam & Thoenes**
**Mauerkircherstrasse 31**
**D - 8000 München 80 (DE)**

---

Courier Press, Leamington Spa, England.

## Schaltungsanordnung zur erdfreien Übertragung von Signalen über Trennstellen in Fernmeldeanlagen

Die Erfindung betrifft eine Schaltungsanordnung zur erdfreien Übertragung von Signalen über Trennstellen in Fernmeldeanlagen mit Hilfe auf der Primärseite der Trennstelle signalgesteuerter hochfrequenter Schwingungen, die auf der Sekundärseite der Trennstelle durch Gleichrichtung zur Wiedergabe der Signale ausgewertet werden, wobei ein Oszillator für die hochfrequenten Schwingungen mit der Sekundärseite der Trennstelle induktiv gekoppelt ist und eine mit einem Lastwiderstand verbundene sekundäre Gleichrichterschaltung speist, die einen Gleichrichter und einen damit in Reihe geschalteten Trenntransistor enthält.

Eine Schaltungsanordnung dieser Art ist beispielsweise aus der DE—B—24 11 871 bekannt. Sie ermöglicht eine Übertragung analoger oder digitaler Signale über Trennstellen bei hoher Übertragungsgeschwindigkeit, wobei auf der Sekundärseite der Trennstelle eine sehr genaue Signalnachbildung ohne eine besondere zu schaltende Spannung möglich ist.

Bei der Übertragung von Signalen mit relativ kleiner Amplitude über Trennstellen kommt es darauf an, daß bei Anwendung hochfrequenter Schwingungen nach der sekundärseitigen Gleichrichtung die niedrigen Amplitudenwerte möglichst linear wiedergegeben werden, was bedeutet, daß eine möglichst verlustfreie Gleichrichtung durchzuführen ist. Bei kleinen Amplitudenwerten können zur eindeutigen Amplitudenauswertung keine Prinzipien bekannter Art angewendet werden, die mit einer relativ hohen Schwellenspannung arbeiten. Dies bedeutet also, daß die sekundärseitige Gleichrichtung möglichst niederohmig durchgeführt werden muß. Andererseits ist aber bei Fehlen von Signalen ein möglichst hochohmiger sekundärseitiger Ausgang der Trennstelle zu fordern, denn insbesondere bei der Anwendung von Trennstellen in Datenübertragungsanlagen, bei denen an eine Übertragungsleitung mehrere Sende- und Empfangseinheiten angeschlossen sind, ist für jeweils nicht wirksame Einheiten eine hochohmige Anschaltung an die Übertragungsleitung erforderlich, damit einerseits der Leitungswiderstand nicht verfälscht wird, andererseits aber auch keine unzweckmäßig hohe Belastung der jeweils angeschalteten Einheit durch andere Einheiten im Ruhezustand erfolgt.

Die Aufgabe der Erfindung besteht deshalb darin, eine Schaltungsanordnung zur erdfreien Übertragung von Signalen über Trennstellen anzugeben, die bei hoher Übertragungsgeschwindigkeit eine möglichst lineare Wiedergabe auch kleinster Amplitudenwerte auf der Sekundärseite ermöglicht und im Ruhezustand einen sehr hohen Ausgangswiderstand besitzt.

Eine Schaltungsanordnung eingangs genannter Art ist zur Lösung dieser Aufgabe erfindungsgemäß derart ausgebildet, daß der Trenntransistor durch den gleichgerichteten Signalen proportionale Signale gesteuert ist, die durch separate Gleichrichtung und Filterung der auf der Sekundärseite der Trennstelle auftretenden Wechselsignale erzeugt werden, daß der Gleichrichter durch die Emitter-Kollektorstrecke eines Transistors gebildet ist und daß zwischen dem Gleichrichter und dem Trenntransistor eine Filtervorrichtung zur Sperrung des Ausgangs der Trennstelle gegen hochfrequente Signalanteile vorgesehen ist.

Durch die Erfindung werden die vorteilhaften Eingenschaften der bekannten Schaltungsanordnung, die in erster Linie in einer besonders hohen möglichen Übertragungsgeschwindigkeit bestehen, beibehalten und ferner eine praktisch verlustfreie Gleichrichtung erzielt, die die lineare Wiedergabe auch kleinster Signalamplituden auf der Sekundärseite der Trennstelle gewährleistet. Dadurch, daß der Gleichrichter durch die Emitter-Kollektorstrecke eines Transistors gebildet ist, muß die Trennstelle nur so dimensioniert sein, daß das diesem Transistor zugeführte Wechselsignal, welches sich aus den hochfrequenten Schwingungen ergibt, den Transistor gerade leitend steuern kann. Die hierzu erforderliche Spannungsamplitude muß nur geringfügig über der Basis-Emitterspannung des als Gleichrichter arbeitenden Transistors liegen. Es ergibt sich dann eine äußerst niederohmige Arbeitsweise des Transistors als Gleichrichter. Der Trenntransistor, der dem Gleichrichter nachgeschaltet ist, wird nun durch Signale gesteuert, die den gleichgerichteten Signalen proportional sind. Die separate Gleichrichtung und Filterung zur Erzeugung der entsprechenden Steuerspannung abhängig von den gleichgerichteten Signalen ist deshalb erforderlich, weil die in Betracht kommenden geringen Signalamplituden zur Ansteuerung des Trenntransistors nicht ausreichen würden. Um aber beim Fehlen zu übertragender Signale einen sehr hochohmigen Trennstellenausgang zu erzeugen, wird ein separates Steuersignal für den Trenntransistor erzeugt, das diesen abhängig von den zu übertragenden Signalen definiert in einen sehr niederohmigen oder sehr hochohmigen Zustand schaltet. Die zwischen dem Trenntransistor und dem für die Gleichrichtung vorgesehenen Transistor angeordnete Filtervorrichtung dient zur Sperrung des Ausgangs der Trennstelle gegen hochfrequente Signalanteile. Dadurch wird gewährleistet, daß auch bei geringen Signalamplituden keine Signalverfälschung auf der an die Trennstelle angeschalteten Leitung durch hochfrequente Störsignale verursacht wird.

Zur Übertragung binärer Datensignal sind vorteilhaft zwei Trennstellenübertrager vorgesehen, deren Primärstromkreise mit den Signalen des einen bzw. des anderen Binärwertes gesteuert sind, während die Sekundärwicklungen beider Trennstellenübertrager in separaten Gleichrichterstromkreisen angeordnet sind, die einen ihnen gemeinsamen Trennstellenausgang speisen. Auf diese Weise werden die beiden Binärwerte über völlig voneinander getrennte Zweige einer Trennstelle übertragen und erst am Trennstellenausgang wieder zusammengeführt. Dies ergibt dann beispielsweise bipolare Signale auf einer an die Trennstelle angeschaltete Übertragungsleitung.

Die Art der Zusammenführung der binären Datensignale kann nach unterschiedlichen Prinzipien erfolgen. Beispielsweise ist es möglich, die beiden Gleichrichterstromkreise über jeweils einen Trenntransistor mit dem Ausgang der Trennstelle zu verbinden. Eine andere Ausführungsform dieses Prinzips besteht darin, daß die beiden Gleichrichterstromkreise mit dem Eingang einer ihnen gemeinsamen Filtervorrichtung verbunden sind und daß zwischen der Filtervorrichtung und dem Ausgang der Trennstelle zwei einander parallel geschaltete Trenntransistoren einander entgegengesetzten Leitfähigkeitstyps vorgesehen sind, die jeweils durch Signale gesteuert sind, welche den in jeweils einem Gleichrichterstromkreis gleichgerichteten Signalen proportional sind.

Ausführungsbeispiele der Erfindung werden im folgenden anhand der Figuren beschrieben. Es zeigen:

Figur 1 die Anwendung einer Schaltungsanordnung nach der Erfindung innerhalb einer Trennstelle zur Übertragung binärer Datensignale und

Figur 2 eine andere Ausführungsform der Sekundärseite der in Figur 1 gezeigten Trennstellenschaltung.

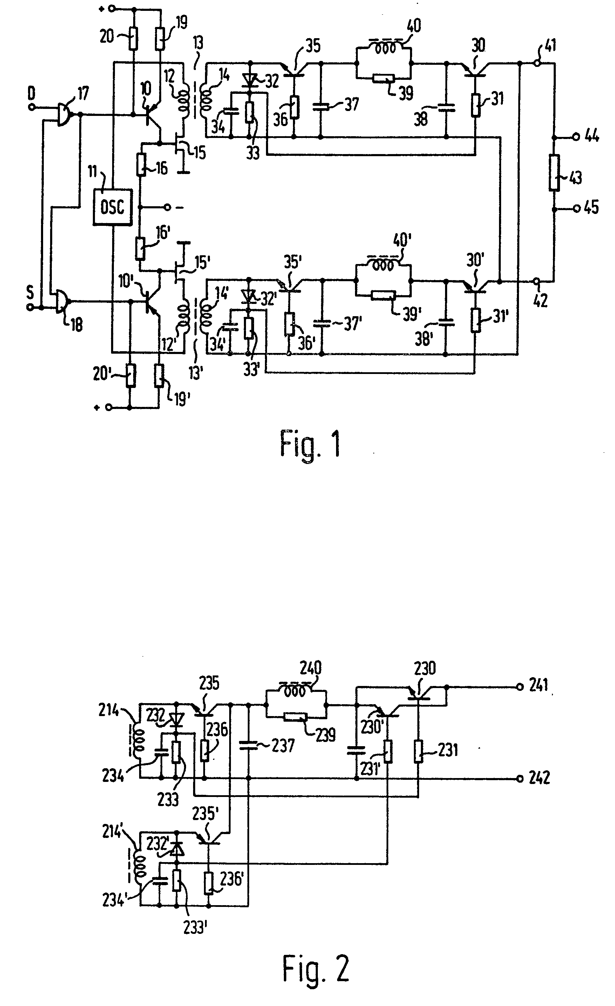

In Figur 1 ist eine Trennstellenschaltung dargestellt, die die erdfreie Übertragung binärer Datensignale ermöglicht. Diese Datensignale werden auf einen Eingang D gegeben, der mit einem Eingang eines NAND-Gliedes 17 verbunden ist. Ein zweiter Trennstelleneingang S erhält ein Sendesignal, das einem Eingang eines NAND-Gliedes 18 sowie dem zweiten Eingang des NAND-Gliedes 17 zugeführt wird. Abhängig von dem Sendesignal wird ein dem Eingang D zugeführtes Datensignal über die NAND-Glieder 17 und 18 der eigentlichen Trennstellenschaltung zugeführt. Diese enthält für jeden binären Signalwert einen Trennstellenübertrager 13 bzw. 13' sowie eine jedem Übertrager 13 bzw. 13' zugeordnete primäre Steuerschaltung und sekundäre Gleichrichterschaltung.

Auf der Primärseite beider Trennstellenübertrager 13 und 13' ist ein Oszillator 11 vorgesehen, der hochfrequente Schwingungen erzeugt, mit deren Hilfe die der Trennstelle zugeführten Datensignale über die Trennstellenübertrager 13 und 13' übertragen werden. Der Oszillator 11 speist jeweils einen Primärstromkreis, der die Primärwicklung 12 bzw. 12' des jeweiligen Trennstellenübertragers 13 bzw. 13' sowie einen damit in Reihe geschalteten Feldeffekttransistor 15 bzw. 15' enthält. Dem Feldeffekttransistor 15 bzw. 15' wird negatives Basispotential über jeweils einen Basiswiderstand 16 bzw. 16' zugeführt. Die Steuersignale für die Durchschaltung des jeweiligen Feldeffekttransistors 15 bzw. 15' werden von einem Schalttransistor 10 bzw. 10' geliefert, der über jeweils einen Emitterwiderstand 19 bzw. 19' und einen Basiswiderstand 20 bzw. 20' mit positivem Betriebsspannungspotential verbunden ist.

Wenn binäre Datensignale auf den Eingang D der Trennstellenschaltung gegeben werden und gleichzeitig ein Sendesignal am Eingang S auftritt, so erscheint am Ausgang des NAND-Gliedes 17 bei Ansteuerung mit dem Binärwert 1 über den Schaltungseingang D ein Signal mit dem Binärwert 0, während bei Ansteuerung mit dem Binärwert 0 ein Ausgangssignal mit dem Binärwert 1 entsteht. Ausgangssignale des NAND-Gliedes 17 mit dem Binärwert 0 bewirken eine Leitendsteuerung des Schalttransistors 10, während Ausgangssignale des NAND-Gliedes 17 mit dem Binärwert 1 über das NAND-Glied 18 eine Leitendsteuerung des Schalttransistors 10' bewirken. Durch den jeweiligen Schaltvorgang wird der Feldeffekttransistor 15 bzw. 15' leitend gesteuert, so daß der jeweilige Trennstellenübertrager 13 bzw. 13' mit hochfrequenten Schwingungen des Oszillators 11 versorgt wird. Diese Schwingungen erzeugen an der jeweiligen Sekundärwicklung 14 bzw. 14' eine Wechselspannung, die durch geeignete Dimensionierung der Trennstellenübertrager 13 und 13' bzw. der Leistung des Oszillators 11 gerade so bemessen sein muß, daß sie geringfügig höher als die Basis-Emitterspannung eines Transistors 35 bzw. 35' ist, so daß dieser durchgeschaltet wird. Die Wechselspannung wird über einen dem Transistor 35 bzw. 35' jeweils zugeordneten Basiswiderstand 36 bzw. 36' wirksam. Infolge der Leitendsteuerung des jeweiligen Transistors 35 bzw. 35' erfolgt eine Gleichrichtung der jeweils anliegenden Wechselspannung, so daß an einem dem Transistor 35 bzw. 35' nachgeschalteten Kondensator 37 bzw. 37' eine gleichgerichtete Spannung auftritt.

Der jeweilige Kondensator 37 bzw. 37' gehört zu einer Filtervorrichtung, die ferner die Parallelschaltung einer Induktivität 40 mit einem Widerstand 39 bzw. einer Induktivität 40' mit einer einem Widerstand 39' sowie einen weiteren Parallelkondensator 38 bzw. 38' enthält. Diese Filtervorrichtung ist in bekannter Weise aufgebaut und verhindert eine Übertragung hochfrequenter Störspannungen auf eine mit dem Trennstellenausgang verbundene Leitung.

Auf die jeweilige Filtervorrichtung folgt die Emitter-Kollektrostrecke eines weiteren Transistors 30 bzw. 30', der als Trenntransistor arbeitet. Dieser Transistor wird über einen Basiswiderstand 31 bzw. 31' mit einer Gleichspannung angesteuert, die der mit dem jeweiligen Gleichrichtertransistor 35 bzw. 35' gleichgerichteten Spannung proportional ist. Diese Steuerspannung wird durch separate Gleichrichtung mittels einer Gleichrichterdiode 32 bzw. 32' und entsprechende Glättung mittels eines Parallel—RC—Gliedes 33/34 bzw. 33'/34' aus der an der jeweiligen Sekundärwicklung 14 bzw. 14' auftretenden Wechselspannung erzeugt. Der Trenntransistor 30 bzw. 30' wird also abhängig von dieser separat gleichgerichteten Steuerspannung durchgeschaltet oder gesperrt, so daß bei Fehlen über die Trennstelle zu übertragender Signale die gesamte Gleichrichterschaltung von einer an die Trennstellenausgänge 41 und 42 angeschalteten Leitung 44/45 abgetrennt ist. Somit wird die Trennstellenschaltung im Ruhezustand ein an die Trennstellenausgänge 41 und 42 angeschaltetes Leitungssystem praktisch nicht belasten, so daß Trennstellen der hier beschriebenen Art an beliebigen Stellen eines Leitungssystems vorgesehen sein können.

Die in Fig. 1 gezeigte Trennstellenschaltung liefert am Trennstellenausgang 41/42 bei Übertragung binärer Datensignale für jeden binären Wert ein Gleichspannungssignal, dessen Polarität von dem jeweiligen Binärwert abhängt.

Die sekundärseitige Ausführung der Trennstellenschaltung kann auch gemäß Fig. 2 so getroffen sein, daß nur eine Filtervorrichtung erforderlich ist. Diese besteht aus zwei Parallelkondensatoren 237 und 238 und der Parallelschaltung einer Induktivität 240 mit einem Widerstand 239 in bekannter Anordnung. Die vor der Filtervorrichtung vorgesehenen Gleichrichterstromkreise mit den Sekundärwicklungen 214 und 214', den Gleichrichtertransistoren 235 und 235' mit Basiswiderständen 236 und 236' sowie mit separater Gleichrichtung mittels Gleichrichterdioden 232 und 232' und Siebgliedern 233/234 und 233'/234' entsprechen dem in Fig. 1 gezeigten Schaltungsprinzip. Hinter der Filtervorrichtung sind jedoch zwei Trenntransistoren 230 und 230' einander entgegengesetzten Leitfähigkeitstyps parallelgeschaltet und speisen einen ihnen gemeinsamen Trennstellenausgang 241/242, der dem in Fig. 1 gezeigten Trennstellenausgang 41/42 entspricht. Die beiden Schalttransistoren werden über jeweils einen Basiswiderstand 231 bzw. 231' mit einer separat gleichgerichteten Steuerspannung angesteuert, die an den bereits genannten Gleichrichterdioden 232 und 232' abgegriffen ist. Die Wirkungsweise der in Fig. 2 gezeigten Schaltung entspricht bezüglich der an den Trennstellenausgang 241/242 abgegebenen Binärsignale der in Fig. 1 dargestellten Schaltungsanordnung.

## Patentansprüche

1. Schaltungsanordnung zur erdfreien Übertragung von Signalen über Trennstellen (13, 13') in Fernmeldeanlagen mit Hilfe auf der Primärseite (12, 12') der Trennstelle signalgesteuerter hochfrequenter Schwingungen, die auf der Sekundärseite (14, 14'; 214, 214') der Trennstelle durch Gleichrichtung zur Wiedergabe der Signale ausgewertet werden, wobei ein Oszillator (11) für die hochfrequenten Schwingungen mit der Sekundärseite der Trennstelle induktiv gekoppelt ist und eine mit einem Lastwiderstand (36, 36'; 236, 236') verbundene sekundäre Gleichrichterschaltung speist, die einen Gleichrichter (35, 35'; 235, 235') und einen damit in Reihe geschalteten Trenntransistor (30, 30'; 230, 230') enthält, dadurch gekennzeichnet, daß der Trenntransistor (30, 30'; 230, 230') durch den gleichgerichteten Signalen proportionale Signale gesteuert ist, die durch separate Gleichrichtung und Filterung der auf der Sekundärseite der Trennstelle auftretenden Wechselsignale erzeugt werden,

daß der Gleichrichter durch die Emitter-Kollektorstrecke eines Transistors (35, 35'; 235, 235') gebildet ist und

daß zwischen dem Gleichrichter (35, 35'; 235, 235') und dem Trenntransistor (30, 30'; 230, 230') eine Filtervorrichtung (39, 40, 39', 40'; 239, 240) zur Sperrung des Ausgangs (41, 42; 241, 242) der Trennstelle gegen hochfrequente Signalanteile vorgesehen ist.

2. Schaltungsanordnung nach Anspruch 1 zur Übertragung binärer Datensignale dadurch gekennzeichnet, daß zwei Trennstellenübertrager (13, 13') vorgesehen sind, deren Primärstromkreise mit den Signalen des einen bzw. des anderen Binärwertes gesteuert sind, und daß die Sekundärwicklungen (14, 14'; 214, 214') beider Trennstellenübertrager (13, 13') in separaten Gleichrichterstromkreisen angeordnet sind, die einen ihnen gemeinsamen Trennstellenausgang (41, 42; 241, 242) speisen.

3. Schaltungsanordnung nach Anspruch 2, dadurch gekennzeichnet, daß die beiden Gleichrichterstromkreise über jeweils einen Trenntransistor (30, 30') mit dem Ausgang (41, 42) der Trennstelle verbunden sind, der durch Signale gesteuert ist, welche den in jeweils einem Gleichrichterstromkreis gleichgerichteten Signalen proportional sind.

4. Schaltungsanordnung nach Anspruch 1 und 2, dadurch gekennzeichnet daß die beiden Gleichrichterstromkreise mit dem Eingang einer ihnen gemeinsamen Filtervorrichtung (239, 240) verbunden sind und daß zwischen der Filtervorrichtung (239, 240) und dem Ausgang (241, 242) der Trennstelle zwei einander parallel geschaltete Trenntransistoren (230, 230') einander entgegengesetzten Leitfähigkeitstyps vorgesehen sind, die jeweils durch Signale gesteuert sind, welche den in jeweils einem Gleichrichterstromkreis gleichgerichteten Signalen proportional sind.

## Revendications

1. Dispositif de circuit pour la transmission, sans mise à la terre commune de la sortie et de l'entrée, de signaux par l'intermédiaire de postes (13, 13') de séparation dans des installations de télécommunication, à l'aide d'oscillations haute fréquence, commandées, du côté primaire (12, 12') du poste de séparation, par le signal, qui sont exploitées du côté secondaire (14, 14', 214, 214') du poste de séparation par redressement pour la reproduction du signal, un oscillateur (11) pour les oscillations haute fréquence étant couplé inductivement avec le côté secondaire du poste de séparation et alimentant un circuit de redressement secondaire relié à une résistance de charge (36, 36', 236, 236') et comprenant un redresseur (35, 35', 235, 235') et un transistor de séparation (30, 30', 230, 230') montés en série, caractérisé en ce que le transistor de séparation (30, 30', 230, 230') est commandé par des signaux, proportionnels aux signaux redressés et qui sont engendrés par un redressement et un filtrage séparés des signaux alternatifs parvenant au côté secondaire du poste de séparation, en ce que le redresseur est formé par le trajet émetteur-collecteur d'un transistor (35, 35', 235, 235'), et en ce qu'on prévoit, entre le redresseur (35, 35', 235, 235') et le transistor de séparation (30, 30', 230, 230'), un dispositif de filtrage (39, 40, 39', 40', 239, 240) pour le blocage de la sortie (41, 42, 241, 242) du poste de séparation à l'égard des parties haute fréquence de signal.

2. Dispositif de circuit selon la revendication 1 pour la transmission de signaux de données binaires, caractérisé en ce que deux transformateurs (13, 13') de postes de séparation sont prévus, dont les circuits de courant primaire sont commandés respectivement par l'une et l'autre des valeurs binaires desdits signaux, et en ce que les enroulements secondaires (14, 14', 214, 214') des deux transformateurs (13, 13') de postes de séparation sont disposés dans de circuits de redressement séparés qui alimentent une sortie qui leur est commune (41, 42, 241, 242) de postes de séparation.

3. Dispositif de circuit selon la revendication 2, caractérisé en ce que les deux circuits de redressement sont reliés respectivement à la sortie (41, 42) du poste de séparation chacun par l'intermédiaire d'un transistor (30, 30') de séparation, ces transistors de séparation étant commandés par des signaux qui sont proportionnels aux signaux redressés dans un des circuits de redressement.

4. Dispositif de circuit selon la revendication 1 ou 2, caractérisé en ce que les deux circuits de redressement sont reliés à l'entrée d'un dispositif de filtrage (239, 240) qui leur est commun, et en ce que sont prévus, entre le dispositif de filtrage (239, 240) et la sortie (241, 242) du poste de séparation, deux transistors de séparation (230, 230') montés en parallèle et présentant des types de conductivité opposés, ces transistors étant chacun commandés par des signaux qui sont proportionnels aux signaux redressés dans un de circuits de redressement.

## Claims

1. Circuit arrangement for the ungrounded transmission of signals across a point of isolation (13, 13') in a telecommunication system by means of signal-controlled highfrequency oscillations on the primary side (12, 12') of the point of isolation, which oscillations are evaluated on the secondary side (14, 14', 214, 214') of the point of isolation by rectification so as to reproduced the signals, wherein an oscillator (11) for the highfrequency oscillations is inductively coupled to the secondary side of the point of isolation and feeds a secondary rectifier circuit which is connected to a load resistance (36, 36', 236, 236') and which comprises a rectifier (35, 35', 235, 235') and a buffer transistor (30, 30', 230, 230') connected in series therewith, characterised in that the buffer transistor (30, 30', 230, 230') is controlled by signals which are proportional to the rectified signals and which are generated by separate rectification and filtering of the alternating signals arising on the secondary side of the point of isolation, in that the rectifier is formed by the emitter/collector circuit of a transistor (35, 35', 235, 235'), and in that between the rectifier (35, 35', 235, 235') and the buffer transistor (30, 30', 230, 230') there is provided a filter device for blocking the output (41, 42, 241, 242) of the point of isolation in respect of highfrequency signal components.

2. Circuit arrangement according to Claim 1 for the transmission of binary data signals, characterised in that two isolation transformers (13, 13') are provided whose primary circuits are controlled with the signals of one or other binary values, and in that the secondary windings (14, 14', 214, 214') of both isolation transformers (13, 13') are arranged in separate rectifier circuits which feed an output (41, 42, 241, 242) common thereto.

3. Circuit arrangement according to Claim 2, characterised in that the two rectifier circuits are connected *via* a respective buffer transistor (30, 30') to the output (41, 42) of the point of isolation, which transistor is controlled by signals which are proportional to the signals rectified in a respective rectifier circuit.

4. Circuit arrangement according to Claims 1 and 2, characterised in that the two rectifier circuits are connected to the input of a filter device (239, 240) common thereto, and in that between the filter device (239, 240) and the output (241, 242) of the point of isolation there are provided two buffer transistors (230, 230') which are connected in parallel with one another, which are of opposite conductivity type to one another and which in each case are controlled by signals which are proportional to signals rectified in a respective rectifier circuit.

Fig. 1

Fig. 2